# EUROPEAN PATENT APPLICATION

(11) **EP 4 621 542 A1**
(43) Date of publication of application: **24.09.2025**
(21) Application number: 23891451.9
(22) Date of filing: 09.11.2023
(51) Int. Cl.: G06F 3/04847

(54) **MIXING DESIGN ASSISTANCE DEVICE, PROGRAM, AND MIXING DESIGN ASSISTANCE METHOD**

(30) Priority: 15.11.2022 JP 2022182597
(71) Applicant: Resonac Corporation, Tokyo 105-7325 (JP)
(72) Inventor: KURAUCHI, Yuji, Tokyo 105-7325 (JP); YATSUSHIRO, Megumi, Tokyo 105-7325 (JP); TAKEMOTO, Shimpei, Tokyo 105-7325 (JP); OKUNO, Yoshishige, Tokyo 105-7325 (JP)
(74) Representative: Strehl & Partner mbB
(86) International application number: PCT/JP2023/040362
(87) International publication number: WO 2024/106299

(57) **Abstract**

A formulation design assistance device is configured to cause a worker to adjust formulation rates of materials. The formulation design assistance device includes a formulation display controller configured to display, on a formulation adjustment screen, a formulation represented by a combination of figures having areas in accordance with the formulation rates; a formulation rate adjustment reception unit configured to receive adjustment of the formulation rates in accordance with a changing operation by the worker with respect to the areas of the figures; and a predicted performance value display controller configured to display a predicted performance value of the formulation.

## Description

### TECHNICAL FIELD

The present disclosure relates to a formulation design assistance device, a program, and a formulation design assistance method.

### BACKGROUND ART

In recent years, by using machine learning or statistical analysis in order to construct a machine learning model configured to predict properties from a formulation, a graph representing change in a predicted value of a property in accordance with change in a formulation is displayed on a computer. For example, Patent Literature 1 discloses a method of producing a graphical depiction of a predicted value of a property of a material, as a technique for custom designing of a product.

### CITATION LIST

### PATENT LITERATURE

Patent Literature 1: PCT Japanese Translation Patent Publication No. 2020-535566

### SUMMARY OF THE INVENTION

### PROBLEM TO BE SOLVED BY THE INVENTION

In a formulation design assistance device configured to cause a worker to adjust formulation rates of materials, it is necessary to adjust the formulation rates (explanatory variable) of the materials for predicting performance (objective variable), such as physical properties and the like. Existing formulation design assistance devices have an issue that it is demanding to adjust formulation rates of materials while understanding the overall image of a formulation. Note that Patent Literature 1 does not satisfactorily address the above-described issue.

It is an object of the present disclosure to provide a formulation design assistance device, a program, and a formulation design assistance method that are configured to adjust formulation rates of materials while understanding the overall image of a formulation.

### MEANS FOR SOLVING THE PROBLEM

The present disclosure includes configurations as presented below.

[1] A formulation design assistance device configured to cause a worker to adjust formulation rates of materials, the formulation design assistance device including:
   a formulation display controller configured to display, on a formulation adjustment screen, a formulation represented by a combination of figures having areas in accordance with the formulation rates;
   a formulation rate adjustment reception unit configured to receive adjustment of the formulation rates in accordance with a changing operation by the worker with respect to the areas of the figures; and
   a predicted performance value display controller configured to display a predicted performance value of the formulation.
[2] The formulation design assistance device according to [1], in which
   at least some of the materials are assigned to one or more groups, and
   the formulation rate adjustment reception unit is configured to receive adjustment of a proportion of the formulation rates of the materials assigned to one group of the one or more groups, with a sum of the formulation rates of the materials assigned to the one group being fixed.
[3] The formulation design assistance device according to [1] or [2], in which
   at least some of the materials are assigned to one or more groups, and
   the formulation rate adjustment reception unit is configured to receive adjustment of a sum of the formulation rates of the materials assigned to one group of the one or more groups, with a proportion of the formulation rates of the materials assigned to the one group being fixed.
[4] The formulation design assistance device according to [1], further including:
   a correlation detection unit configured to detect a correlation of the formulation rates from data used for machine learning of a machine learning model configured to predict performance from the formulation, in which
   the formulation rate adjustment reception unit is configured not to receive adjustment of the formulation rates that are not in accordance with the correlation.
[5] The formulation design assistance device according to [4], further including:
   a group assignment unit configured to assign one or more groups to at least some of the materials in accordance with the correlation.
[6] The formulation design assistance device according to [2] or [3], further including:
   a correlation detection unit configured to detect a correlation of the formulation rates from data used for machine learning of a machine learning model configured to predict performance from the formulation, in which
   the formulation rate adjustment reception unit is configured not to receive adjustment of the formulation rates that are not in accordance with the correlation.
[7] The formulation design assistance device according to [6], further including:
   a group assignment unit configured to assign one or more groups to at least some of the materials in accordance with the correlation.
[8] The formulation design assistance device according to any one of [1] to [7], in which
   at least some of the materials are assigned to groups, and
   the formulation display controller is configured to
      display, on the formulation adjustment screen, a formulation graph configured to receive adjustment of the formulation rates of the materials in a format of a tree map,
      receive, by the changing operation in a first direction with respect to the areas of the figures, adjustment of a sum of the formulation rates of the materials assigned to one group of the groups, with a proportion of the formulation rates of the materials assigned to the one group being fixed, and
      receive, by the changing operation in a second direction with respect to the areas of the figures, adjustment of a proportion of the formulation rates of the materials assigned to another one group of the groups, with a sum of the formulation rates of the materials assigned to the another one group being fixed.
[9] The formulation design assistance device according to any one of [1] to [7], in which
   at least some of the materials are assigned to groups, and
   the formulation display controller is configured to
      display, on the formulation adjustment screen, a formulation graph configured to receive adjustment of the formulation rates of the materials in a format of a sunburst chart,
      receive, by the changing operation with respect to the areas of the figures into which a first circle is divided, adjustment of a sum of the formulation rates of the materials assigned to one group of the groups, with a proportion of the formulation rates of the materials assigned to the one group being fixed, and
      receive, by the changing operation with respect to the areas of the figures into which a second circle is divided, adjustment of a proportion of the formulation rates of the materials assigned to another one group of the groups, with a sum of the formulation rates of the materials assigned to the another one group being fixed.
[10] A program causing a formulation design assistance device configured to cause a worker to adjust formulation rates of materials to function as:
   a formulation display controller configured to display, on a formulation adjustment screen, a formulation represented by a combination of figures having areas in accordance with the formulation rates;
   a formulation rate adjustment reception unit configured to receive, from the worker, adjustment of the formulation rates in accordance with a changing operation with respect to the areas of the figures; and
   a predicted performance value display controller configured to display a predicted performance value of the formulation.
[11] A formulation design assistance method performed with a formulation design assistance device configured to cause a worker to adjust formulation rates of materials, the formulation design assistance method including:
   a formulation display controlling step of displaying, on a formulation adjustment screen, a formulation represented by a combination of figures having areas in accordance with the formulation rates;
   a formulation rate adjustment reception step of receiving, from the worker, adjustment of the formulation rates in accordance with a changing operation with respect to the areas of the figures; and
   a predicted performance value display controlling step of displaying a predicted performance value of the formulation.

### ADVANTAGEOUS EFFECTS OF THE INVENTION

According to the present disclosure, it is possible to adjust formulation rates of materials while understanding the overall image of a formulation.

### BRIEF DESCRIPTION OF THE DRAWINGS

[FIG. 1] FIG. 1 is a configuration diagram of an example of a formulation design assistance system according to the present embodiment.
[FIG. 2] FIG. 2 is a hardware configuration diagram of an example of a computer according to the present embodiment.
[FIG. 3] FIG. 3 is a functional configuration diagram of an example of the formulation design assistance system according to the present embodiment.
[FIG. 4] FIG. 4 is an image diagram of an example of a formulation adjustment screen according to the present embodiment.
[FIG. 5] FIG. 5 is an explanatory diagram of an example of a changing operation with respect to areas of figures representing formulation rates.
[FIG. 6] FIG. 6 is an explanatory diagram of an example of a changing operation with respect to areas of figures representing formulation rates that are in a constant-sum relationship.
[FIG. 7] FIG. 7 is an explanatory diagram of an example of a changing operation with respect to areas of figures representing formulation rates that are in a constant-ratio relationship.
[FIG. 8] FIG. 8 is a diagram describing an example of adjustment of formulation rates that are in a constant-sum relationship.
[FIG. 9] FIG. 9 is a diagram describing an example of adjustment of formulation rates that are in a constant-ratio relationship.
[FIG. 10] FIG. 10 is an image diagram of an example of a formulation graph according to the present embodiment.
[FIG. 11] FIG. 11 is a diagram describing an example of creating a correlation formula using a least absolute value method, RANSAC, Theil-Sen regression, or the like.
[FIG. 12] FIG. 12 is a flowchart of an example of a process of the formulation design assistance system according to the present embodiment.
[FIG. 13] FIG. 13 is an image diagram of an example of a formulation adjustment field of the formulation adjustment screen according to the present embodiment.
[FIG. 14] FIG. 14 is a diagram of an example of a profile in which change in a predicted performance value is plotted against change in formulation rates of materials.

### DESCRIPTION OF THE EMBODIMENTS

Next, embodiments of the present invention will be described in detail. The present invention is not limited to the following embodiments. In the present embodiment, each formulation rate is a rate that is set for each material in a formulation, for example, "Material 1 is 30%" and the like. In the present embodiment, the formulation is a set of a plurality of formulation rates in which the total is 100%, for example, "Material 1 is 30%, Material 2 is 50%, and Material 3 is 20%" and the like.

### [First Embodiment]

### <System Configuration>

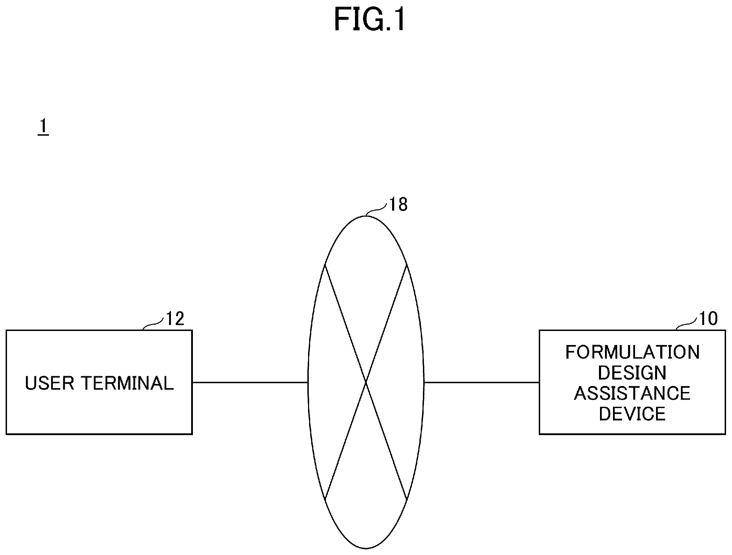

FIG. 1 is a configuration diagram of an example of a formulation design assistance system according to the present embodiment. A formulation design assistance system 1 of FIG. 1 includes a formulation design assistance device 10 and a user terminal 12. The formulation design assistance device 10 and the user terminal 12 are connected to enable data communication via a communication network 18, such as a local area network (LAN), the Internet, or the like.

The user terminal 12 is an information processing device operated by a worker, such as a PC, a tablet terminal, a smartphone, or the like. The user terminal 12 is configured to display a formulation adjustment screen and receive, from the worker, an operation necessary for adjusting formulation rates of materials. The user terminal 12 is configured to transmit, to the formulation design assistance device 10, contents of the operation received from the worker. Also, the user terminal 12 is configured to display, on the formulation adjustment screen, predicted performance values for confirmation by the worker, and the displayed predicted performance values are, for example, properties predicted by the formulation design assistance device 10 from the formulation.

The formulation design assistance device 10 is an information processing device, such as a PC, a workstation, or the like, configured to perform a process of predicting performance of a product from a formulation and displaying the predicted performance on the formulation adjustment screen, in accordance with an operation to adjust formulation rates of materials received from the worker. The formulation design assistance device 10 predicts, from the formulation rates (explanatory variable) of the materials, the performance (objective variable) of a product formed in accordance with the formulation, for example, by using a machine learning model that has undergone machine learning of training data. In the following, the predicted performance value of the product formed in accordance with the formulation may be referred to as a predicted performance value of a formulation. The formulation design assistance device 10 performs a process for displaying, on the formulation adjustment screen, a predicted performance value of a formulation that has been predicted, e.g., transmitting, to the user terminal 12, a predicted performance value of a formulation that has been predicted.

Image data for displaying the formulation adjustment screen may be generated by the formulation design assistance device 10 and transmitted to the user terminal 12. Alternatively, data necessary for generating the formulation adjustment screen may be transmitted to the user terminal 12 from the formulation design assistance device 10, and image data for displaying the formulation adjustment screen may be generated on the user terminal 12.

By displaying the below-described formulation adjustment screen for assisting a worker in designing a formulation, the formulation design assistance system 1 according to the present embodiment assists the worker in readily adjusting formulation rates of materials while understanding the overall image of a formulation.

The formulation design assistance system 1 of FIG. 1 is just an example, and there are various system configuration examples in accordance with applications and purposes. For example, the formulation design assistance device 10 may be implemented by a plurality of computers or may be implemented as a cloud computing service. Also, the formulation design assistance system 1 of FIG. 1 may be implemented as a stand-alone computer.

### <Hardware Configuration>

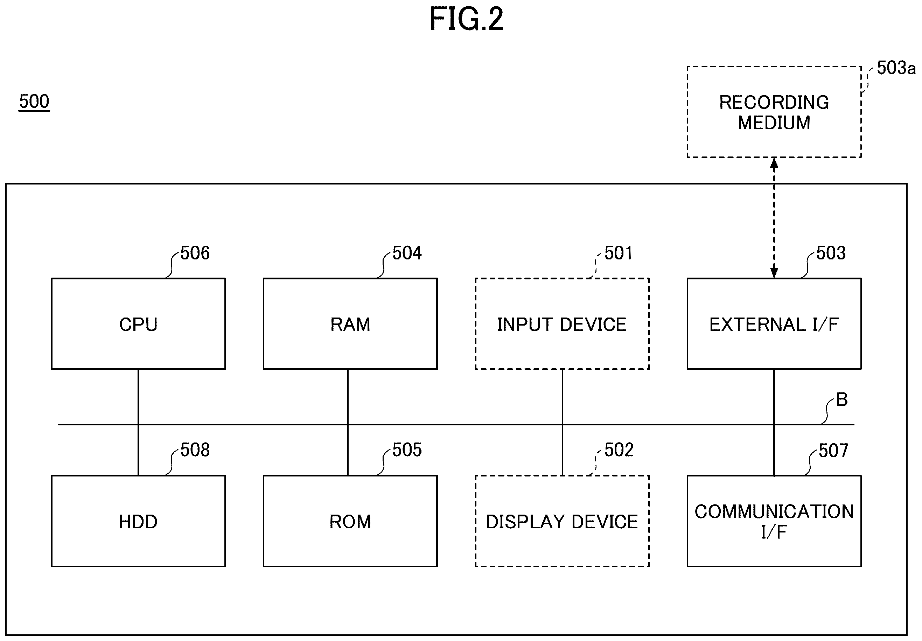

The formulation design assistance device 10 and the user terminal 12 of FIG. 1 are implemented, for example, by a computer 500 having a hardware configuration as illustrated in FIG. 2.

FIG. 2 is a hardware configuration diagram of an example of a computer according to the present embodiment. The computer 500 of FIG. 2 includes an input device 501, a display device 502, an external I/F 503, a RAM 504, a ROM 505, a CPU 506, a communication I/F 507, an HDD 508, and the like, and these are connected to each other through a bus B. The input device 501 and the display device 502 may be connected for use.

The input device 501 is a touch panel, an operation key, a button, a keyboard, a mouse, or the like, which is used by a worker to input various signals. The display device 502 is formed, for example, by a display, such as a liquid crystal or organic EL display configured to display a screen, and a speaker configured to output sound data, such as voices, sounds, and the like. The communication I/F 507 is an interface for data communication performed by the computer 500.

The HDD 508 is an example of a non-volatile storage device that stores programs and data. The programs and data stored in the HDD 508 are: OS that is basic software controlling the entire computer 500; applications that provide various functions on the OS; and the like. The computer 500 may utilize, instead of the HDD 508, a drive device using a flash memory as a storage medium (e.g., a solid state drive (SSD) or the like).

The external I/F 503 is an interface with an external device. The external device is a recording medium 503a or the like. Thus, the computer 500 can read from and/or write in the recording medium 503a via the external I/F 503. The recording medium 503a is a flexible disk, a CD, a DVD, an SD memory card, a USB memory, or the like.

The ROM 505 is an example of a non-volatile semiconductor memory (storage device) that is configured to retain programs and data even if power is turned off. The ROM 505 stores programs and data performed upon start-up of the computer 500, such as BIOS, OS setting, network setting, and the like. The RAM 504 is an example of a volatile semiconductor memory (storage device) that is configured to temporarily retain programs and data.

The CPU 506 is a computing device configured to implement controls and functions of the entire computer 500 by reading out programs and data on the RAM 504 from a storage device, such as the ROM 505, the HDD 508, or the like, and performing processes. By executing programs, the computer 500 according to the present embodiment can implement the below-described various functions of the formulation design assistance device 10 and the user terminal 12. The CPU 506 may read out, via the external I/F 503, the program from the recording medium 503a, in which the program is stored, and then execute the program.

### <Functional Configuration>

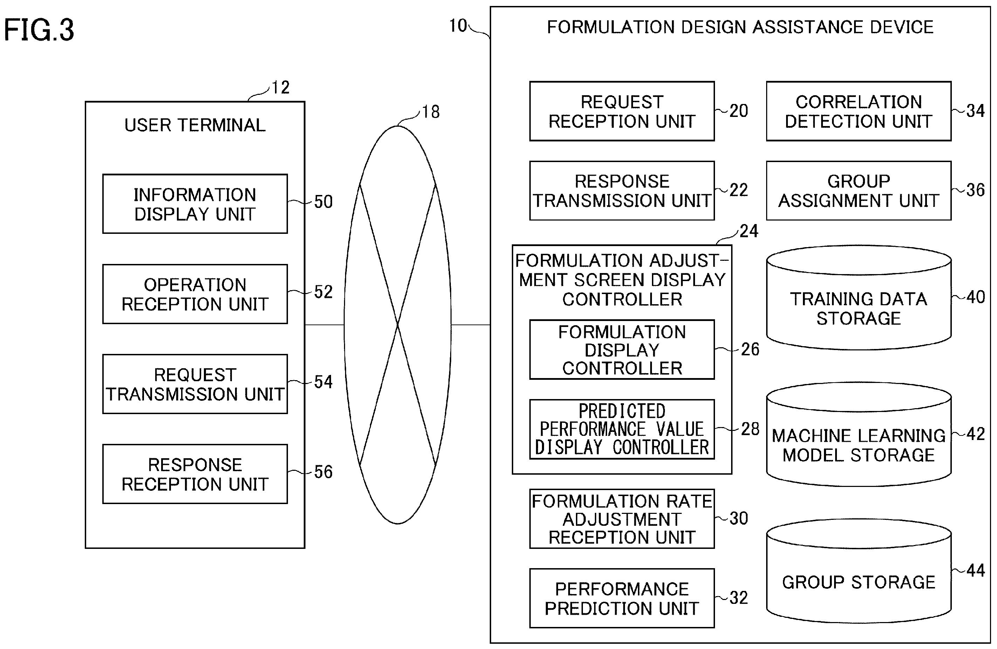

The configuration of the formulation design assistance system 1 according to the present embodiment will be described. FIG. 3 is a functional configuration diagram of an example of the formulation design assistance system according to the present embodiment. The configuration diagram of FIG. 3 appropriately omits units that are not necessary for the description of the present embodiment. Although the following describes an example in which image data of the formulation adjustment screen is generated in the formulation design assistance device 10, such image data may be generated by a program, such as an application or the like, installed in the user terminal 12.

The formulation design assistance device 10 of the formulation design assistance system 1 illustrated in FIG. 3 has a configuration including a request reception unit 20, a response transmission unit 22, a formulation adjustment screen display controller 24, a formulation display controller 26, a predicted performance value display controller 28, a formulation rate adjustment reception unit 30, a performance prediction unit 32, a correlation detection unit 34, a group assignment unit 36, a training data storage 40, a machine learning model storage 42, and a group storage 44. Also, the user terminal 12 has a configuration including an information display unit 50, an operation reception unit 52, a request transmission unit 54, and a response reception unit 56.

The information display unit 50 of the user terminal 12 is configured to display, on the display device 502, the below-described formulation adjustment screen configured to assist a worker in designing a formulation. The operation reception unit 52 is configured to receive, from the worker, various operations, such as, for example, an operation with respect to the formulation adjustment screen. The request transmission unit 54 is configured to transmit a request for a process to the formulation design assistance device 10 in accordance with various operations, such as, for example, an operation with respect to the formulation adjustment screen. The response reception unit 56 is configured to receive, from the formulation design assistance device 10, a response to the request for the process transmitted by the request transmission unit 54.

The request reception unit 20 of the formulation design assistance device 10 is configured to receive the request for the process in accordance with an operation of the worker. The response transmission unit 22 is configured to transmit, to the user terminal 12, a response to the request for the process received by the request reception unit 20.

The formulation adjustment screen display controller 24 is configured to generate image data of the formulation adjustment screen described below, and perform control of displaying the formulation adjustment screen on the user terminal 12. The formulation display controller 26 is configured to perform control of displaying a below-described formulation graph on the formulation adjustment screen. The predicted performance value display controller 28 is configured to perform control of displaying a predicted performance value of a formulation adjusted by the worker on the formulation adjustment screen.

The formulation rate adjustment reception unit 30 is configured to receive, from the worker, adjustment of the formulation rates of the materials in accordance with a worker's operation received by the user terminal 12 on the formulation adjustment screen. The performance prediction unit 32 is configured to perform machine learning of training data, and predict a predicted performance value of a formulation by using a machine learning model configured to predict performance of a product from a formulation (hereinafter referred to simply as a machine learning model). The machine learning can use, for example, supervised learning. The machine learning model, configured to predict performance of a product from a formulation, learns a relationship between formulations and performances of products by using training data in which the formulations are associated with the performances of the products formed in accordance with the formulations, and predicts the predicted performance value of the formulation in accordance with the relationship.

The correlation detection unit 34 is configured to detect a correlation of formulation rates from the training data used for the machine learning of the machine learning model. The correlation of formulation rates includes relationships of the constant sum or constant ratio of formulation rates existing in the training data. The constant sum of formulation rates indicates a relationship in which the sum of formulation rates of a plurality of materials assigned to the same group is fixed as described below. Also, the constant ratio of formulation rates indicates a relationship in which the proportion of formulation rates of a plurality of materials assigned to the same group is fixed.

The group assignment unit 36 is configured to assign a group in accordance with the correlation of formulation rates. The assignment of the group may be performed manually by an operator in accordance with intended functions, such as a filler, a bonding material, and the like. Alternatively, the assignment of the group may be performed automatically in accordance with the correlation of formulation rates detected by the correlation detection unit 34. Alternatively, the assignment of the group may be performed so as to take over a recipe in which the past formulation is recorded (past recipe).

The training data storage 40 is configured to store training data used for the machine learning. The machine learning model storage 42 is configured to store a machine learning model. The group storage 44 is configured to store an assigned group.

### <Formulation Adjustment Screen>

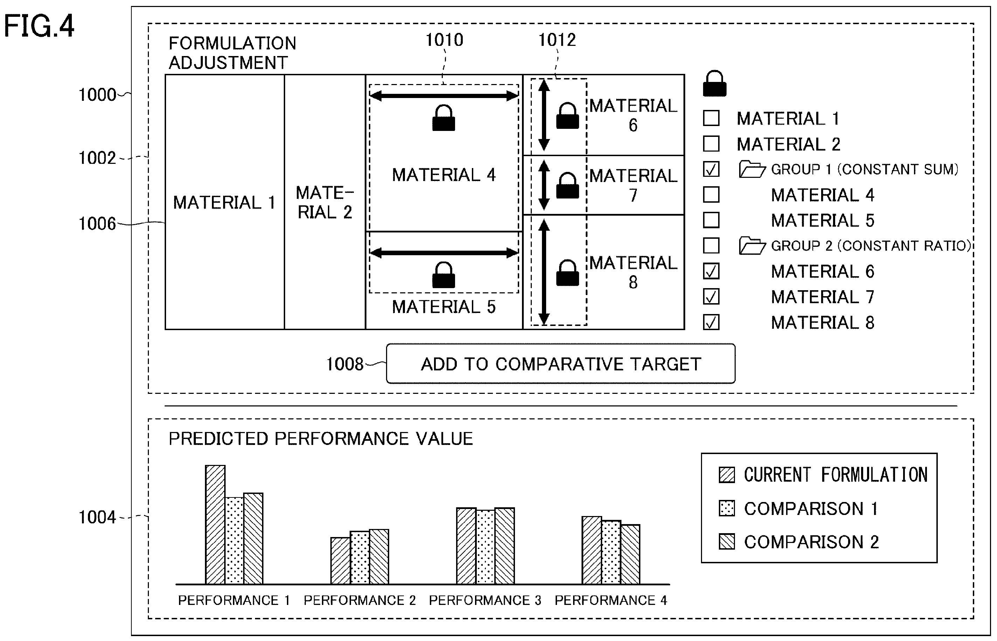

FIG. 4 is an image diagram of an example of a formulation adjustment screen according to the present embodiment. A formulation adjustment screen 1000 of FIG. 4 includes a formulation adjustment field 1002 and a predicted performance value display field 1004. The formulation adjustment field 1002 includes a formulation graph 1006. The formulation graph 1006 is an example of a display configured to receive adjustment of formulation rates of materials in the format of a tree map. The formulation graph 1006 represents a formulation by a combination of figures having areas in accordance with the formulation rates (hereinafter these figures are each referred to as a formulation rate figure). The area in accordance with a formulation rate becomes larger as the formulation rate is higher, and the area in accordance with a formulation rate becomes smaller as the formulation rate is lower. The total of the formulation rates of Materials 1, 2, and 4 to 8 represented by the formulation graph 1006 is 100%. The formulation graph 1006 represents the overall image of the formulation. The formulation rate figures in the formulation graph 1006 may be displayed so as to be visually distinguishable by means of coloring with different colors, hatching, or the like. When a formulation of materials is represented by formulation amounts, the formulation graph 1006 may be represented by a marimekko chart (also referred to as a mosaic plot).

A mark 1010 displayed on the formulation graph 1006 indicates that the formulation rates of "MATERIAL 4" and "MATERIAL 5" are in a constant-sum relationship. A mark 1012 displayed on the formulation graph 1006 indicates that the formulation rates of "MATERIAL 6", "MATERIAL 7", and "MATERIAL 8" are in a constant-ratio relationship. For the formulation rates in a constant-sum relationship, the check box of an assigned group is automatically checked. For the formulation rates in a constant-ratio relationship, the check boxes of materials assigned to the same group are automatically checked.

For the formulation rates of materials that are not in a constant-sum relationship or a constant-ratio relationship, the formulation rates of the materials that do not receive a changing operation with respect to the areas of the formulation rate figures can be designated by checking the corresponding check boxes.

The predicted performance value display field 1004 is configured to display predicted performance values of the formulation (current formulation) represented by the formulation graph 1006. "COMPARISON 1" and "COMPARISON 2", displayed on the predicted performance value display field 1004 of FIG. 4, are predicted performance values of formulations different from the current formulation, and are stored as comparative examples by pressing a button 1008 in which is recorded "ADD TO COMPARATIVE TARGET" in the formulation adjustment field 1002. The predicted performance value display field 1004 of FIG. 4 displays, for each performance, bar graphs representing the predicted performance values of the current formulation, the formulation of "COMPARISON 1", and the formulation of "COMPARISON 2".

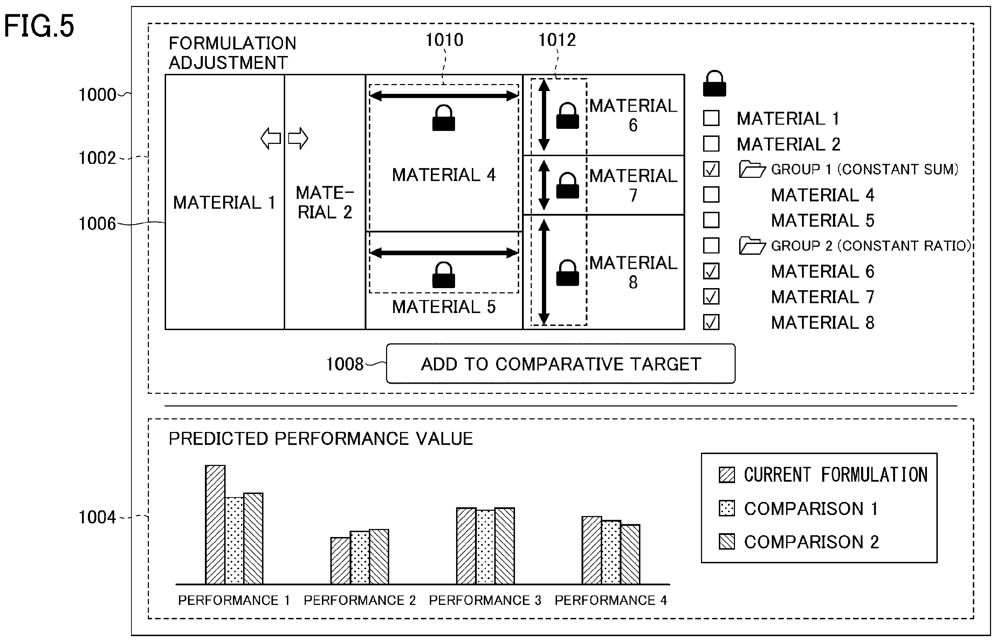

As illustrated in FIGS. 5 to 7, the formulation adjustment screen 1000 according to the present embodiment receives, from the worker, a changing operation with respect to the areas of the formulation rate figures, thereby adjusting the formulation rates in accordance with the changing operation.

FIG. 5 is an explanatory diagram of an example of the changing operation with respect to the areas of the formulation rate figures. In FIG. 5, it is possible to receive adjustment of the formulation rates of "MATERIAL 1" and "MATERIAL 2" in accordance with the changing operation with respect to the areas of the formulation rate figures of "MATERIAL 1" and "MATERIAL 2" in the formulation graph 1006. A worker can perform the changing operation with respect to the areas of the formulation rate figures of "MATERIAL 1" and "MATERIAL 2" by dragging a line between the formulation rate figures of "MATERIAL 1" and "MATERIAL 2" in the formulation graph 1006 of FIG. 5 so as to move the line leftward and rightward.

The changing operation with respect to the areas of the formulation rate figures may be performed by an operator designating a formulation rate figure whose area is to be enlarged and a formulation rate figure whose area is to be reduced. Alternatively, the changing operation with respect to the areas of the formulation rate figures may be performed by an operator designating a formulation rate figure whose area is to be enlarged and equally dividing the other formulation rate figures, i.e., reducing the area of each of the other formulation rate figures. The predicted performance values of the current formulation displayed in the predicted performance value display field 1004 change in accordance with the changing operation with respect to the areas of the formulation rate figures of the formulation graph 1006.

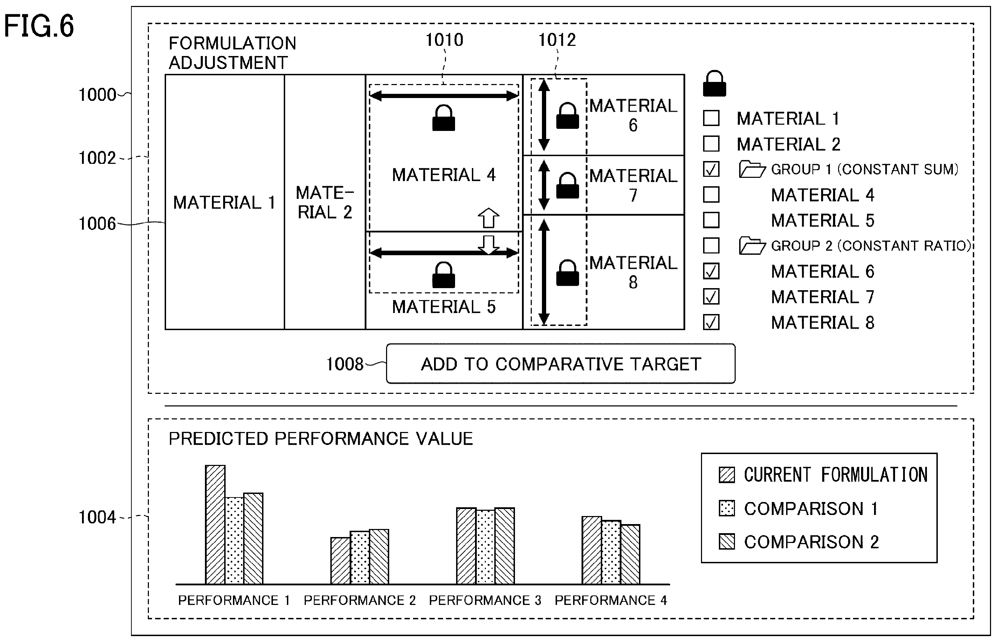

FIG. 6 is an explanatory diagram of an example of the changing operation with respect to the areas of the formulation rate figures that are in a constant-sum relationship. In FIG. 6, it is possible to receive adjustment of the formulation rates of "MATERIAL 4" and "MATERIAL 5" in accordance with the changing operation with respect to the areas of the formulation rate figures of "MATERIAL 4" and "MATERIAL 5" in the formulation graph 1006. A worker can perform the changing operation with respect to the areas of the formulation rate figures of "MATERIAL 4" and "MATERIAL 5" by dragging a line between the formulation rate figures of "MATERIAL 4" and "MATERIAL 5" assigned to the same group, i.e., "GROUP 1", in FIG. 6 so as to move the line upward and downward.

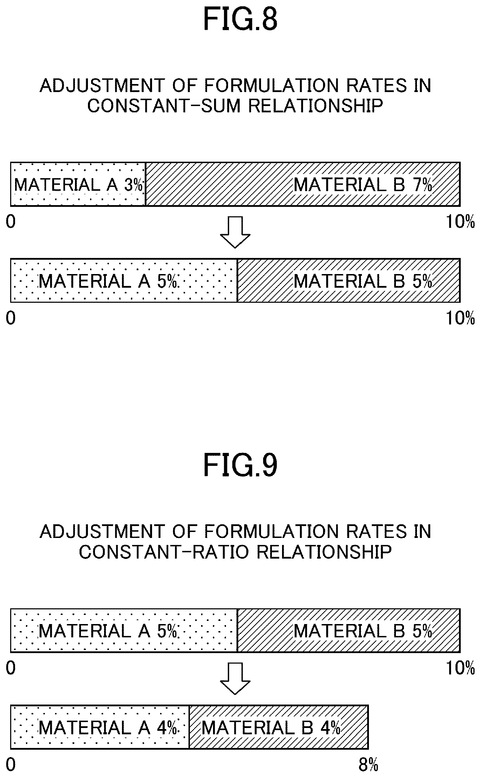

The formulation rate figures of "MATERIAL 4" and "MATERIAL 5" in the formulation graph 1006 of FIG. 6 are in a constant-sum relationship. FIG. 8 is a diagram describing an example of adjustment of the formulation rates that are in a constant-sum relationship. FIG. 8 illustrates an example of "MATERIAL A" and "MATERIAL B" that are in a constant-sum relationship. As illustrated in FIG. 8, with the sum of "MATERIAL A" and "MATERIAL B" in a constant-sum relationship being fixed to "10%", the proportion (balance) of the formulation rates can be adjusted such that "MATERIAL A: 3%" and "MATERIAL B: 7%" are changed to "MATERIAL A: 5%" and "MATERIAL B: 5%".

In the formulation graph 1006 of FIG. 6, the horizontal widths of the formulation rate figures of "MATERIAL 4" and "MATERIAL 5" in a constant-sum relationship are locked. Thus, with the sum of the formulation rates of "MATERIAL 4" and "MATERIAL 5" within "GROUP 1" being fixed, the proportion (balance) of the formulation rates of "MATERIAL 4" and "MATERIAL 5" can be adjusted. Therefore, a worker can adjust the formulation rates of the materials, grouped in accordance with an intended function, within a group of the materials without changing the sum of the formulation rates within the group of the materials.

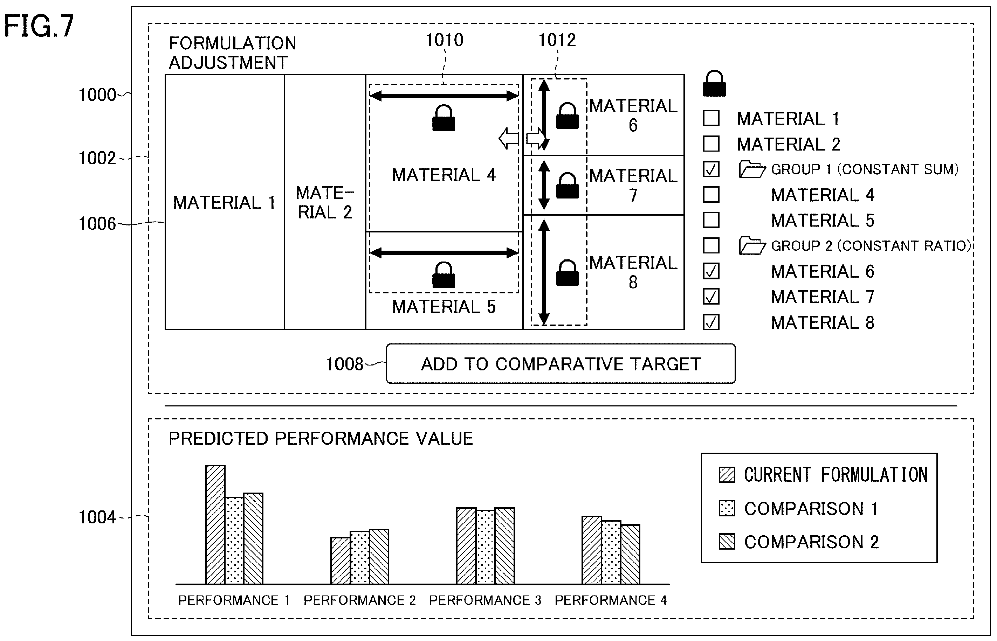

FIG. 7 is an explanatory diagram of an example of the changing operation with respect to the areas of the formulation rate figures that are in a constant-ratio relationship. In FIG. 7, it is possible to receive adjustment of the formulation rates of "MATERIAL 6", "MATERIAL 7", and "MATERIAL 8" in accordance with the changing operation with respect to the areas of the formulation rate figures of "MATERIAL 6", "MATERIAL 7", and "MATERIAL 8" in the formulation graph 1006. A worker can perform dragging with respect to the horizontal width of "MATERIAL 6", "MATERIAL 7", and "MATERIAL 8" assigned to the same group, i.e., "GROUP 2", thereby performing the changing operation with respect to the areas of the formulation rate figures of "MATERIAL 6", "MATERIAL 7", and "MATERIAL 8".

The formulation rate figures of "MATERIAL 6", "MATERIAL 7", and "MATERIAL 8" in the formulation graph 1006 of FIG. 7 are in a constant-ratio relationship. FIG. 9 is a diagram describing an example of adjustment of the formulation rates that are in a constant-ratio relationship. FIG. 9 illustrates an example of "MATERIAL A" and "MATERIAL B" that are in a constant-ratio relationship. As illustrated in FIG. 9, with the proportion (balance) of the formulation rates of "MATERIAL A" and "MATERIAL B" in a constant-ratio relationship being fixed within a group, the sum of the formulation rates of "MATERIAL A" and "MATERIAL B" within the group can be adjusted from "10%" to "8%".

In the formulation rate figures of "MATERIAL 6", "MATERIAL 7", and "MATERIAL 8" in a constant-ratio relationship in the formulation graph 1006 of FIG. 7, the proportion (balance) of the formulation rates of "MATERIAL 6", "MATERIAL 7", and "MATERIAL 8" within "GROUP 2" is locked. Thus, with the proportion of the formulation rates of "MATERIAL 6", "MATERIAL 7", and "MATERIAL 8" within "GROUP 2" being fixed, the sum of the formulation rates of "MATERIAL 6", "MATERIAL 7", and "MATERIAL 8" can be adjusted.

According to the formulation graph 1006 of the formulation adjustment screen 1000 according to the present embodiment, it is possible to adjust formulation rates of materials while understanding the overall image of a formulation, in accordance with grouping of the materials in accordance with an intended function.

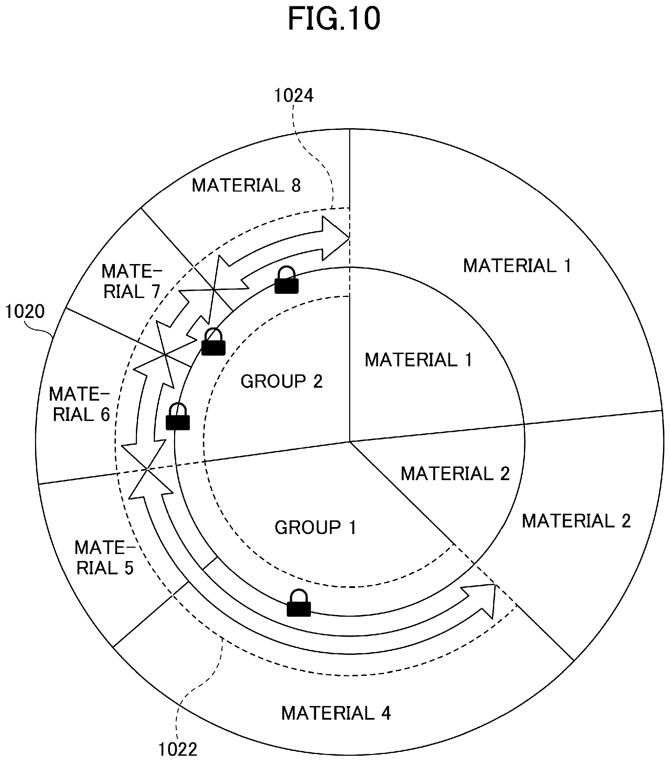

The formulation graph 1006 illustrated in FIG. 4 and the like is just an example, and a formulation graph 1020 illustrated in FIG. 10 may be used. FIG. 10 is an image diagram of an example of the formulation graph according to the present embodiment. The formulation graph 1020 illustrated in FIG. 10 is also displayed, for example, in the formulation adjustment field 1002 of the formulation adjustment screen 1000 illustrated in FIG. 4 and the like.

The formulation graph 1020 is an example of a display configured to receive adjustment of formulation rates of materials in the format of a sunburst chart. The sunburst chart is a tiered pie chart. The inner circle of the formulation graph 1020 of FIG. 10 represents a formulation by a combination of figures having areas in accordance with the formulation rates of "MATERIAL 1", "MATERIAL 2", "GROUP 1", and "GROUP 2".

The outer circle of the formulation graph 1020 of FIG. 10 represents a formulation by a combination of figures having areas in accordance with the formulation rates of "MATERIAL 1", "MATERIAL 2", "MATERIAL 4", "MATERIAL 5", "MATERIAL 6", "MATERIAL 7", and "MATERIAL 8" (hereinafter these figures are each referred to as a formulation rate figure). The total of the formulation rates of MATERIALS 1, 2, and 4 to 8 represented by the outer circle of the formulation graph 1020 is 100%. The formulation graph 1020 represents the overall image of the formulation.

A mark 1022 displayed on the formulation graph 1020 indicates that the formulation rates of "MATERIAL 4" and "MATERIAL 5" are in a constant-sum relationship. A mark 1024 displayed on the formulation graph 1020 indicates that the formulation rates of "MATERIAL 6", "MATERIAL 7", and "MATERIAL 8" are in a constant-ratio relationship.

Also, similar to the formulation graph 1006 illustrated in FIGS. 5 to 7, the formulation graph 1020 is configured to receive, from a worker, a changing operation with respect to the areas of the formulation rate figures, thereby adjusting the formulation rates in accordance with the changing operation.

According to the formulation graph 1006 of the formulation adjustment screen 1000 according to the present embodiment, it is possible to adjust formulation rates of materials while understanding the overall image of a formulation, in accordance with grouping of the materials in accordance with an intended function.

### <Avoidance of Forbidden Formulation>

It is desirable that the formulation design assistance device 10 according to the present embodiment can forbid or automate change in the area of the formulation rate figure in order to avoid a formulation in which a predicted performance value obtained by the performance prediction unit 32 becomes indeterminate on the formulation adjustment screen 1000 (forbidden formulation). The forbidden formulation is a formulation in which the predicted performance value becomes indeterminate due to taking over the past recipes or a limited number of experiments (the number of experiments in which exhaustive experiments are impossible in terms of the number of steps).

Therefore, the formulation design assistance device 10 according to the present embodiment detects a correlation existing in formulation rates of materials from the training data and/or the past recipes, and identifies a formulation that does not satisfy the detected correlation, as a forbidden formulation. Thus, a worker can adjust formulation rates of materials while avoiding the forbidden formulation.

Detection of a correlation existing in formulation rates of materials from the training data and/or the past recipes can be performed in the following manner by using, for example, the variance inflation factor (VIF). First, in the case of detecting a correlation existing in formulation rates of materials from the training data, Material X_{target} to study is selected.

Next, a reproduction formula (prediction formula) of X_{target} using Material X other than X_{target} as an explanatory variable is formed to a correlation formula by using a least absolute value method, RANSAC (Random Sample Consensus), Theil-Sen regression, or the like.

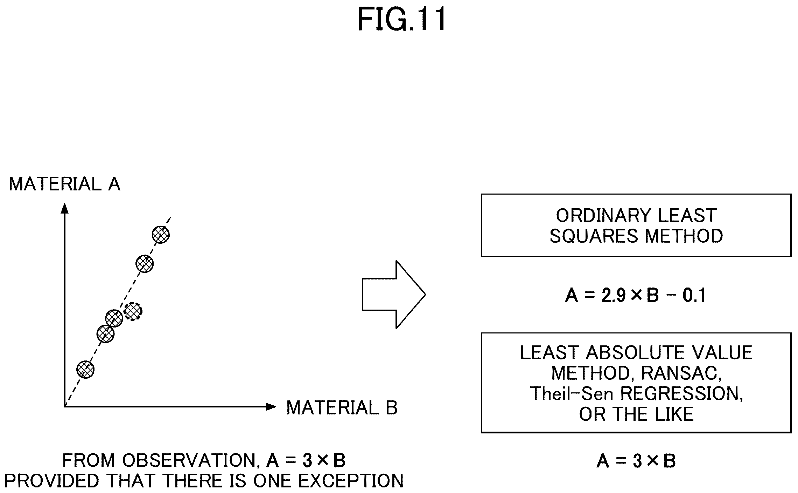

FIG. 11 is a diagram describing an example of creating a correlation formula using a least absolute value method, RANSAC, Theil-Sen regression, or the like. As illustrated in FIG. 11, it is assumed that by observing training data, a correlation between MATERIAL A and MATERIAL B is "MATERIAL A = 3 × MATERIAL B" as a relationship between the formulation rate of MATERIAL A and the formulation rate of MATERIAL B. However, exceptional data is included. When an ordinary least squares method is used, the formulated correlation may be disturbed by the influence of the exceptional data, like "MATERIAL A = 2.9 × MATERIAL B - 0.1". On the other hand, when the least absolute value method or RANSAC is used, the influence of the exceptional data is suppressed by virtue of robustness, and thus "MATERIAL A = 3 × MATERIAL B" can be obtained as the correlation between MATERIAL A and MATERIAL B. In this manner, the formulation design assistance device 10 according to the present embodiment detects a correlation existing in formulation rates of materials in a form of the constant sum and the constant ratio of the formulation rates, i.e., in as simple a form as possible.

Next, the VIF is calculated from the reproducibility (R² value) of X_{target}. If the VIF is a threshold value (e.g., 10 or more), it is regarded that a correlation is established, and the reproduction formula is retained. The retained reproduction formula represents a correlation of intentional formulation rates, such as, for example, the constant sum and the constant ratio of the formulation rates derived from the training data and/or the past recipes.

Then, in order to avoid a forbidden formulation in accordance with the retained reproduction formula, the formulation design assistance device 10 according to the present embodiment displays the formulation graph 1006 in a format that locks the horizontal width of the formulation rate figures when the formulation rates are in a constant-sum relationship as illustrated in FIG. 6, or in a format that locks the vertical width of the formulation rate figures when the formulation rates are in a constant-ratio relationship as illustrated in FIG. 7.

Of the groups of materials displayed on the formulation adjustment screen 1000, the groups that are automatically set in accordance with the detected correlation of the formulation rates may be unlockable by a worker. A correlation of formulation rates that cannot be expressed by simple formulae, such as the constant sum and the constant ratio of formulation rates, need not be expressed as a group on the formulation adjustment screen 1000, and change in the areas of the formulation rate figures may be forbidden or automated so as to be able to avoid the forbidden formulation.

### <Process>

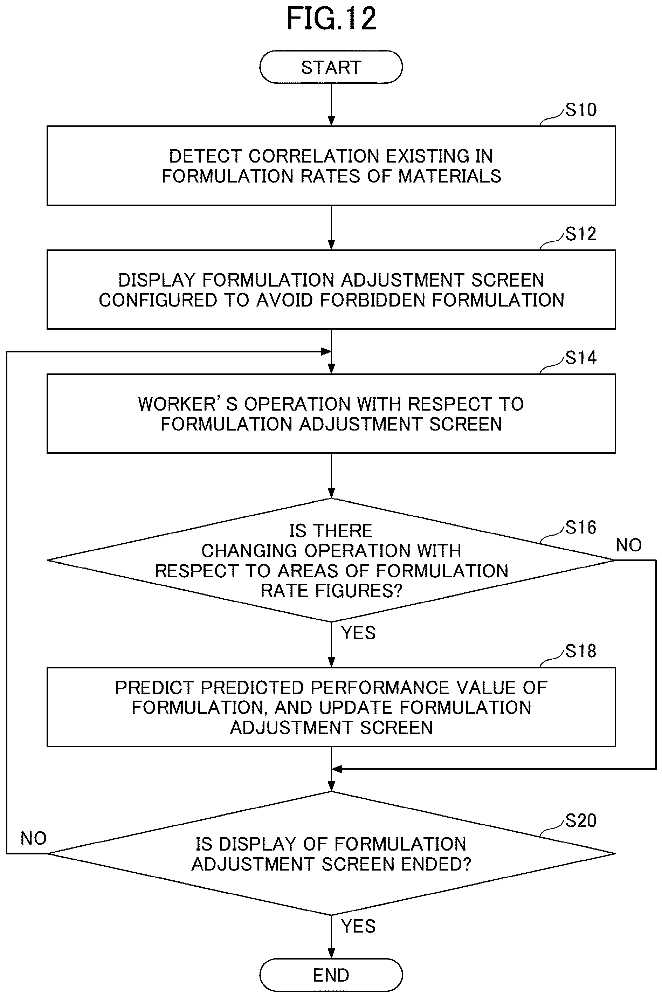

The following describes a process through which the formulation design assistance system 1 according to the present embodiment causes a worker to adjust formulation rates. FIG. 12 is a flowchart of an example of a process of the formulation design assistance system according to the present embodiment.

In step S10, the formulation design assistance device 10 detects a correlation existing in the formulation rates of materials from the training data, the past recipes, and the like, and identifies a formulation that does not satisfy the detected correlation, as a forbidden formulation.

In step S12, the formulation design assistance device 10 displays the formulation adjustment screen 1000 configured to avoid the forbidden formulation, as illustrated in FIGS. 4 to 7. In step S14, the formulation design assistance device 10 receives a worker's operation with respect to the formulation adjustment screen 1000.

In step S16, the formulation design assistance device 10 determines whether or not there is a worker's changing operation with respect to the areas of the formulation rate figures. If there is not a changing operation with respect to the areas of the formulation rate figures, the formulation design assistance device 10 performs the process of step S20. If there is a changing operation with respect to the areas of the formulation rate figures, the formulation design assistance device 10 performs the process of step S18.

In step S18, the formulation design assistance device 10 predicts a predicted performance value of a formulation indicated by the formulation graph 1006 adjusted by the worker's operation in step S14, and updates the predicted performance value of the current formulation in the predicted performance value display field 1004 of the formulation adjustment screen 1000. After the process of step S18, the formulation design assistance device 10 performs the process of step S20.

In step S20, the formulation design assistance device 10 determines whether or not display of the formulation adjustment screen 1000 is ended. If display of the formulation adjustment screen 1000 is not ended, the formulation design assistance device 10 returns to the process of step S14. If display of the formulation adjustment screen 1000 is ended, the formulation design assistance device 10 ends the process of the flowchart of FIG. 12.

### [Other Embodiments]

The present embodiment has been described using an example in which change in the areas of the formulation rate figures is forbidden or automated so as to be able to avoid a formulation in which a predicted performance value obtained by the performance prediction unit 32 becomes indeterminate (forbidden formulation). For example, in a process of inverse problem analysis, when exhaustive search points are generated at random or at a predetermined step width, and the performance of a product corresponding to each of the exhaustive search points is predicted using a trained machine learning model, a predicted performance value corresponding to the exhaustive search point that does not satisfy the detected correlation may be visually differently displayed as a predicted performance value that will be indeterminate.

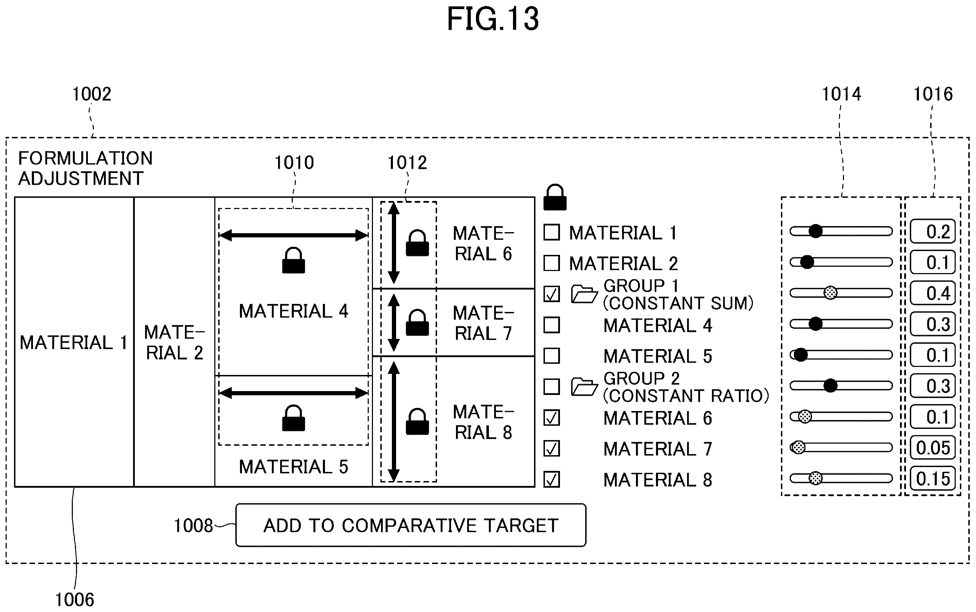

The formulation adjustment screen 1000 illustrated in FIGS. 4 to 7 may receive, from a worker, an input of formulation rates by arranging at least one of a slider 1014 or a text box 1016, as illustrated in the formulation adjustment field 1002 of FIG. 13. FIG. 13 is an image diagram of an example of the formulation adjustment field of the formulation adjustment screen according to the present embodiment. For formulation rates that are fixed, or formulation rates that are changed along with other formulation rates, such as, for example, formulation rates in a constant-sum relationship or formulation rates in a constant-ratio relationship, the slider 1014 and the text box 1016 may be, for example, grayed out so as not to receive an input from a worker.

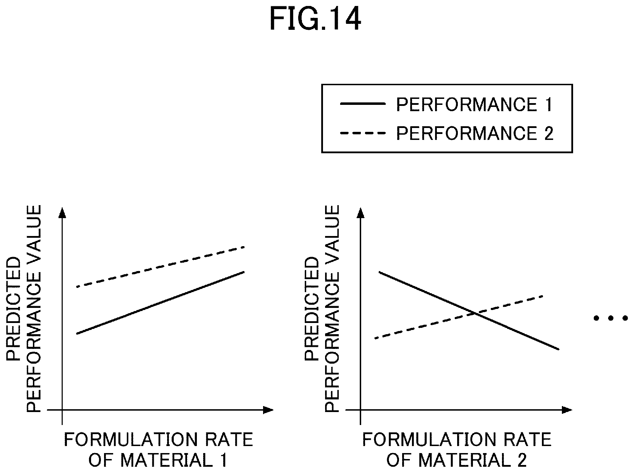

Also, in order for a worker to efficiently obtain intended performance, the formulation adjustment screen 1000 illustrated in FIGS. 4 to 7 may display a profile, for example, as illustrated in FIG. 14. FIG. 14 is a diagram of an example of a profile in which change in the predicted performance values is plotted against change in the formulation rates of materials. By referring to the profile illustrated in FIG. 14, a worker can find out how the predicted performance value changes when changing the formulation rates of materials. For example, a worker who refers to the profile of FIG. 14 can find that the predicted performance value of "PERFORMANCE 1" decreases and the predicted performance value of "PERFORMANCE 2" increases, as the formulation rate of "MATERIAL 2" increases.

As described above, according to the formulation design assistance system 1 according to the present embodiment, it is possible to assist a worker in adjusting formulation rates of materials while understanding the overall image of a formulation. Also, according to the formulation design assistance system 1 according to the present embodiment, it is possible to forbid or automate change in the areas of some formulation rate figures such that a formulation in which a predicted performance value becomes indeterminate is not adjusted by a worker.

Information of the formulation adjusted by the formulation design assistance system 1 according to the present embodiment may be used, for example, as information input to a production apparatus configured to form a product in accordance with the information of the formulation. The production apparatus can formulate a plurality of materials in accordance with the information of the formulation, and can form a product.

Although the present embodiment has been described above, it should be understood that various modifications of forms and details are possible without departing from the spirit and scope of the claims recited. Although the present invention has been described above by way of the examples, the present invention is not limited to the above examples, and various modifications are possible within the scope of the claims recited. The present application claims priority to the basic application No. 2022-182597 filed with the Japan Patent Office on November 15, 2022, the entire contents of which are incorporated herein by reference.

### REFERENCE SIGNS LIST

- 1: Formulation design assistance system
- 10: Formulation design assistance device
- 12: User terminal
- 18: Communication network
- 26: Formulation display controller
- 28: Predicted performance value display controller
- 30: Formulation rate adjustment reception unit
- 34: Correlation detection unit
- 36: Group assignment unit
- 1000: Formulation adjustment screen
- 1002: Formulation adjustment field
- 1004: Predicted performance value display field
- 1006: Formulation graph

## Claims

1. A formulation design assistance device configured to cause a worker to adjust formulation rates of materials, the formulation design assistance device comprising:
a formulation display controller configured to display, on a formulation adjustment screen, a formulation represented by a combination of figures having areas in accordance with the formulation rates;
a formulation rate adjustment reception unit configured to receive adjustment of the formulation rates in accordance with a changing operation by the worker with respect to the areas of the figures; and
a predicted performance value display controller configured to display a predicted performance value of the formulation.

2. The formulation design assistance device according to claim 1, wherein
at least some of the materials are assigned to one or more groups, and
the formulation rate adjustment reception unit is configured to receive adjustment of a proportion of the formulation rates of the materials assigned to one group of the one or more groups, with a sum of the formulation rates of the materials assigned to the one group being fixed.

3. The formulation design assistance device according to claim 1 or 2, wherein
at least some of the materials are assigned to one or more groups, and
the formulation rate adjustment reception unit is configured to receive adjustment of a sum of the formulation rates of the materials assigned to one group of the one or more groups, with a proportion of the formulation rates of the materials assigned to the one group being fixed.

4. The formulation design assistance device according to claim 1, further comprising:
a correlation detection unit configured to detect a correlation of the formulation rates from data used for machine learning of a machine learning model configured to predict performance from the formulation, wherein
the formulation rate adjustment reception unit is configured not to receive adjustment of the formulation rates that are not in accordance with the correlation.

5. The formulation design assistance device according to claim 4, further comprising:
a group assignment unit configured to assign one or more groups to at least some of the materials in accordance with the correlation.

6. The formulation design assistance device according to claim 2 or 3, further comprising:
a correlation detection unit configured to detect a correlation of the formulation rates from data used for machine learning of a machine learning model configured to predict performance from the formulation, wherein
the formulation rate adjustment reception unit is configured not to receive adjustment of the formulation rates that are not in accordance with the correlation.

7. The formulation design assistance device according to claim 6, further comprising:
a group assignment unit configured to assign one or more groups to at least some of the materials in accordance with the correlation.

8. The formulation design assistance device according to any one of claims 1 to 7, wherein
at least some of the materials are assigned to groups, and
the formulation display controller is configured to:
display, on the formulation adjustment screen, a formulation graph configured to receive adjustment of the formulation rates of the materials in a format of a tree map,
receive, by the changing operation in a first direction with respect to the areas of the figures, adjustment of a sum of the formulation rates of the materials assigned to one group of the groups, with a proportion of the formulation rates of the materials assigned to the one group being fixed, and
receive, by the changing operation in a second direction with respect to the areas of the figures, adjustment of a proportion of the formulation rates of the materials assigned to another one group of the groups, with a sum of the formulation rates of the materials assigned to the another one group being fixed.

9. The formulation design assistance device according to any one of claims 1 to 7, wherein
at least some of the materials are assigned to groups, and
the formulation display controller is configured to:
display, on the formulation adjustment screen, a formulation graph configured to receive adjustment of the formulation rates of the materials in a format of a sunburst chart,
receive, by the changing operation with respect to the areas of the figures into which a first circle is divided, adjustment of a sum of the formulation rates of the materials assigned to one group of the groups, with a proportion of the formulation rates of the materials assigned to the one group being fixed, and
receive, by the changing operation with respect to the areas of the figures into which a second circle is divided, adjustment of a proportion of the formulation rates of the materials assigned to another one group of the groups, with a sum of the formulation rates of the materials assigned to the another one group being fixed.

10. A program causing a formulation design assistance device configured to cause a worker to adjust formulation rates of materials to function as:
a formulation display controller configured to display, on a formulation adjustment screen, a formulation represented by a combination of figures having areas in accordance with the formulation rates;
a formulation rate adjustment reception unit configured to receive, from the worker, adjustment of the formulation rates in accordance with a changing operation with respect to the areas of the figures; and
a predicted performance value display controller configured to display a predicted performance value of the formulation.

11. A formulation design assistance method performed with a formulation design assistance device configured to cause a worker to adjust formulation rates of materials, the formulation design assistance method comprising:
a formulation display controlling step of displaying, on a formulation adjustment screen, a formulation represented by a combination of figures having areas in accordance with the formulation rates;
a formulation rate adjustment reception step of receiving, from the worker, adjustment of the formulation rates in accordance with a changing operation with respect to the areas of the figures; and
a predicted performance value display controlling step of displaying a predicted performance value of the formulation.
